**Europäisches Patentamt**

**European Patent Office**

**Office européen des brevets**

(19)

(11) **EP 1 172 639 A1**

(12) **DEMANDE DE BREVET EUROPEEN**

(43) Date de publication:
**16.01.2002 Bulletin 2002/03**

(51) Int Cl.[7]: **G01K 7/42**, G01K 1/20

(21) Numéro de dépôt: **01401732.1**

(22) Date de dépôt: **28.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **11.07.2000 FR 0009057**

(71) Demandeur: **Peugeot Citroen Automobiles SA 92200 Neuilly sur Seine (FR)**

(72) Inventeurs:
• **Benasser, Lakhdar
  92170 Vanves (FR)**
• **Riat, Jean-Christophe
  95870 Bezons (FR)**

(74) Mandataire: **Bouget, Lucien et al
  Cabinet Lavoix 2, Place d'Estienne d'Orves
  75441 Paris Cédex 09 (FR)**

(54) **Procédé et dispositif de mesure de la température de l'air dans un local et en particulier dans un habitacle de véhicule automobile**

(57) On mesure un premier flux thermique ($\Phi_1$) sur un premier capteur de flux thermique (5) disposé dans le local (4), on règle la température ($T_2$) d'un second capteur de flux thermique (6) disposé dans le local (4), à une valeur différente d'une température ($T_1$) du premier capteur de flux thermique (5), par apport ou par prélèvement de chaleur sur le second capteur (6), on mesure un second flux thermique ($\Phi_2$) sur le second capteur de flux thermique (6), on mesure les températures ($T_1$) et ($T_2$) du premier et du second capteurs (5, 6) respectivement, et on calcule à partir du premier et du second flux thermiques ($\Phi_1$, $\Phi_2$) et des température ($T_1$, $T_2$) du premier et du second capteurs (5, 6), la température ($T_a$) de l'air dans le local (4). L'invention s'applique en particulier à la mesure de la température de l'air dans un habitacle de véhicule automobile, pour commander un climatiseur.

EP 1 172 639 A1

**Description**

L'invention concerne un procédé et un dispositif de mesure de la température de l'air dans un local, par exemple dans un habitacle d'un véhicule automobile.

Les climatiseurs automatiques des véhicules automobiles utilisent des informations fournies par des capteurs afin d'élaborer un programme d'injection d'air de climatisation dans l'habitacle du véhicule automobile, pour assurer aux passagers du véhicule, un bon niveau de confort thermique.

Les moyens utilisés pour commander l'injection d'air de chauffage ou de climatisation dans l'habitacle du véhicule automobile comportent des sondes de mesure fournissant des informations liées à la marche du véhicule automobile (par exemple la température d'eau du moteur du véhicule, de l'évaporateur, de l'air soufflé dans l'habitacle ou encore la vitesse du véhicule), ou encore des informations liées aux conditions climatiques régnant dans la zone où l'on utilise le véhicule automobile (par exemple la température extérieure ou l'ensoleillement).

Parmi les informations liées au véhicule automobile, la température de l'air dans l'habitacle du véhicule est une donnée fondamentale pour définir le programme d'injection d'air de chauffage ou de climatisation dans l'habitacle et assurer ainsi le niveau de confort nécessaire aux passagers du véhicule automobile.

Il est nécessaire d'utiliser, pour mesurer la température de l'air à l'intérieur de l'habitacle, au moins un capteur constitué par une sonde de température placée dans l'habitacle.

Du fait que la température de l'habitacle n'est pas homogène, la température de l'air près des parois de l'habitacle étant souvent très différente de la température au milieu de l'habitacle, on doit associer au capteur de température qui est placé sur une paroi de l'habitacle, un motoventilateur qui a pour rôle de brasser l'air de l'habitacle autour du capteur. On obtient ainsi une mesure de température qui est plus représentative de la température moyenne de l'air à l'intérieur de l'habitacle.

Toutefois, le coût de l'ensemble constitué par le ventilateur et le capteur est relativement élevé, pour obtenir une simple mesure de température. En outre, le motoventilateur est équipé d'une grille pour pouvoir aspirer l'air à l'intérieur de l'habitacle, cette grille entraînant certaines contraintes de style dans la réalisation de l'habitacle du véhicule. Les stylistes chargés de la conception esthétique de l'habitacle doivent intégrer au mieux cette grille dans l'une des parois.

De manière générale, dans le cas d'un local quelconque, par exemple un local d'habitation, il peut être nécessaire de mesurer une valeur représentative de la température de l'air dans le local, par exemple pour assurer la commande d'un climatiseur, par des moyens simples et peu coûteux pouvant être facilement intégrés à une paroi du local.

Le but de l'invention est donc de proposer un procédé de mesure de la température de l'air dans un local, par exemple dans un habitacle d'un véhicule automobile, qui puisse être réalisé par des moyens peu coûteux et facilement intégrables dans une paroi du local, tout en fournissant à tout instant une valeur de la température dans le local parfaitement représentative de la température moyenne de l'air dans le local.

Dans ce but :

- on mesure un premier flux thermique $\Phi_1$ sur un premier capteur de flux thermique disposé dans le local,
- on règle la température $T_2$ d'un second capteur de flux thermique disposé dans le local à une valeur différente d'une température $T_1$ du premier capteur de flux thermique, par l'un au moins d'un apport ou d'un prélèvement de chaleur sur le second capteur,
- on mesure un second flux thermique $\Phi_2$ sur le second capteur de flux thermique,
- on mesure les température $T_1$ et $T_2$ du premier et du second capteurs, respectivement, et
- on calcule, à partir du premier et du second flux thermique $\Phi_1$, $\Phi_2$ et des températures $T_1$, $T_2$ du premier et du second capteurs, la température de l'air dans le local.

L'invention est également relative à un dispositif de mesure de la température de l'air dans un local, par exemple dans un habitacle d'un véhicule automobile comportant à l'intérieur du local :

- un premier capteur de flux thermique de mesure d'un premier flux thermique $\Phi_1$ sur le premier capteur, un second capteur de flux thermique de mesure d'un second flux thermique $\Phi_2$ sur le second capteur,
- l'un au moins d'un moyen d'apport et d'un moyen de prélèvement de chaleur sur le second capteur commandé pour régler la température du second capteur à une valeur différente de la température du premier capteur,
- des moyens de mesure de la température du premier et du second capteurs, et
- un module de calcul de la température de l'air dans le local à partir du premier et du second flux thermiques et des températures du premier et du second capteurs.

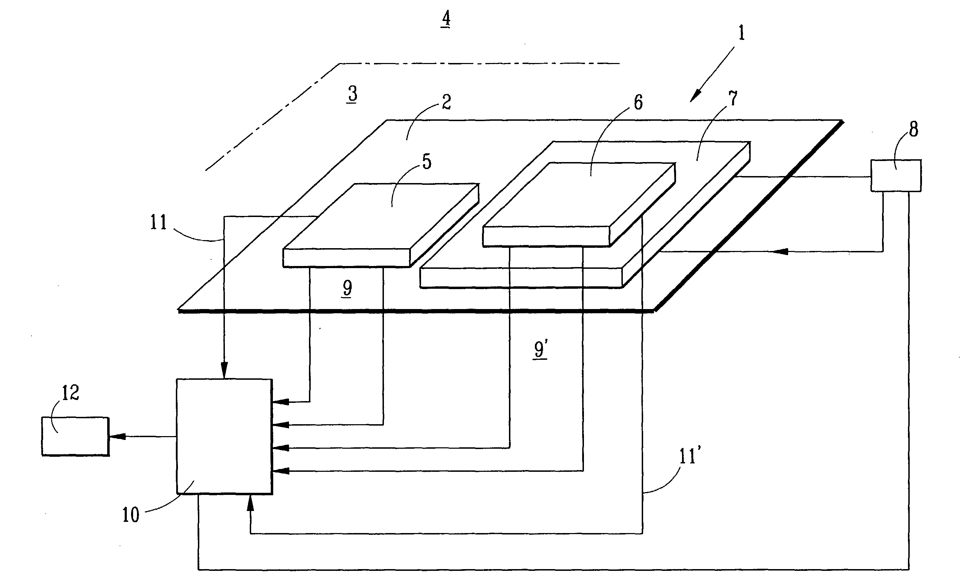

Afin de bien faire comprendre l'invention, on va maintenant décrire, à titre d'exemple, en se référant à la figure jointe en annexe, un mode de réalisation du procédé et du dispositif de mesure suivant l'invention utilisé pour mesurer la température dans l'habitacle d'un véhicule automobile.

La figure unique est une vue schématique d'un dispositif de mesure de la température de l'air dans l'habitacle d'un véhicule automobile, par le procédé de l'invention.

Sur la figure, on a représenté le dispositif de mesure de la température de l'air dans l'habitacle d'un véhicule automobile désigné de manière générale par le repère 1.

Le dispositif de mesure de température 1 comporte un support 2 qui peut être constitué par une plaque ou une feuille de faible épaisseur qui peut être fixée sur une paroi 3 de l'habitacle 4 du véhicule automobile. Le support 2 qui peut être souple ou rigide présente une forme plane ou toute forme courbe adaptée à la forme de la paroi 3 du véhicule automobile.

Sur le support 2, sont disposés, de manière adjacente, un premier capteur de flux thermique 5 et un second capteur de flux thermique 6 de forme plate et présentant une surface de contact avec l'air dans l'habitacle 4 du véhicule automobile comprise entre quelques dizaines de millimètres carrés et quelques dizaines de centimètres carrés. Par exemple, la surface des capteurs thermiques 5 et 6 peut être comprise entre 25 $mm^2$ et 25 $cm^2$.

L'épaisseur des capteurs qui sont fixés, par exemple, par collage ou par sertissage sur le support 2 est sensiblement inférieure à 1 mm et par exemple inférieure à 0,3 mm.

De tels capteurs de flux thermiques sont constitués par des éléments thermoélectriques répartis suivant la surface du capteur et comportent au moins un thermocouple permettant de mesurer la température du capteur.

Le flux thermique reçu ou libéré par le capteur dans le milieu ambiant est mesuré sous la forme d'une tension prélevée aux bornes du capteur.

Comme capteurs de flux thermique 5 et 6, on peut utiliser, par exemple, des capteurs de flux thermique CAPTEC, référence 300, de la société Captec Entreprise.

De tels capteurs permettent de mesurer des flux thermiques échangés avec le milieu extérieur avec une précision de $\pm$ 0,1 $W/m^2$ et la température du capteur avec une précision de $\pm$ 0,1°C.

Le capteur de flux thermique 5 est fixé directement sur le support 2 du dispositif de mesure 1, par exemple par collage.

Le second capteur de flux thermique 6 est fixé dans une disposition adjacente au premier capteur de flux thermique 5 par l'intermédiaire d'une résistance de chauffage 7 fixée, par exemple par collage sur le support 2. La résistance électrique 7 qui est réalisée sous la forme d'une plaquette de faible épaisseur, par exemple d'une épaisseur sensiblement égale à l'épaisseur des capteurs de flux thermique 5 et 6, est fixée, par exemple par collage sur le support 2, le second capteur de flux thermique 6 étant fixé sur la surface externe de la résistance 7.

La résistance électrique 7 qui doit assurer le chauffage du second capteur de flux thermique 6, jus-qu'à une température $T_2$ différente de la température $T_1$ du premier capteur de flux thermique 5, peut être constituée par une résistance métallique fixée ou noyée dans un support ayant la forme d'une plaquette. La résistance de chauffage 7 est reliée à un dispositif d'alimentation 8 en courant électrique régulé assurant le chauffage de la résistance 7 et du capteur de flux thermique 6 de manière que la température du second capteur 6 soit sensiblement constante et différente de la température $T_1$ d'équilibre du premier capteur de flux thermique 5 avec le milieu ambiant.

Le dispositif de mesure 1 comporte de plus un module électronique de calcul 10 auquel sont reliées, par des conducteurs électriques 9, les bornes de sortie du premier capteur de flux thermique 5, et par des conducteurs électriques 9', les bornes de sortie de mesure du second capteur de flux thermique 6. De plus, des conducteurs électriques 11 et 11' permettent de relier le thermocouple de mesure de la température $T_1$ du premier capteur de flux thermique 5 et le thermocouple de mesure de la température $T_2$ du second capteur de flux thermique 6, respectivement, au module électronique 10.

De cette manière, le module électronique 10 reçoit une première tension représentative du flux thermique $\Phi_1$ du premier capteur de flux thermique 5, une seconde tension représentative du second flux thermique $\Phi_2$ du second capteur de flux thermique 6 et deux tensions représentatives, respectivement, de la température $T_1$ du premier capteur de flux thermique 5 et de la température $T_2$ du second capteur de flux thermique 6.

Les différentes tensions reçues par le module électronique 10 sont traitées par le module électronique de calcul, sous forme analogique ou numérique, d'une part pour réguler le dispositif d'alimentation 8 en courant électrique de la résistance de chauffage 7 et d'autre part pour calculer un signal de température de l'air dans le local représenté de manière conventionnelle sous la référence 12 en sortie du module électronique 10.

Le signal représentatif de la température $T_2$ du second capteur 6 et le signal représentatif de la température $T_1$ du premier capteur de flux thermique 5 sont utilisés par le module électronique 10 pour réguler le dispositif d'alimentation 8 de la résistance électrique 7, de manière que la température $T_2$ du second capteur de flux thermique 6 soit sensiblement constante pendant les mesures et sensiblement différente de la température $T_1$ du premier capteur de flux thermique 5.

Le calcul de la température de l'air $T_a$ dans l'habitacle 4 du véhicule automobile, à partir des flux $\Phi_1$ et $\Phi_2$ et des températures $T_1$ et $T_2$ découle des formules donnants les flux mesurés par un capteur thermique, en fonction de la surface de mesure et de la température du capteur et de la température de l'air dans le local où est disposé le capteur.

La formule (1) ci-dessous donne la valeur du flux $\Phi_1$ du premier capteur de flux thermique 5 et la formule (2) la valeur du flux mesurée par le second capteur de flux thermique (6).

$$\Phi_1 = hS_1 \cdot (T_1 - T_a) \qquad (1)$$

$$\Phi_2 = hS_2 \cdot (T_2 - T_a) \qquad (2)$$

Dans les formules 1 et 2, $\Phi_1$ et $\Phi_2$ désignent, respectivement, les flux mesurés par le premier capteur 5 et par le second capteur 6, h est une constante dépendant du type de capteur utilisé et des caractéristiques de l'air du local, $S_1$ et $S_2$ sont les surfaces de contact des capteurs de flux thermique 5 et 6, respectivement, $T_1$ et $T_2$ les températures des capteurs 5 et 6, respectivement, et $T_a$, la température de l'air dans l'habitacle du véhicule automobile.

Les flux sont généralement exprimés en W, la constante h, en $W/°K.m^2$, les surfaces en $m^2$ et les températures en °K.

Les capteurs 5 et 6 étant de type identique et soumis au même environnement, la constante h est la même dans le cas des deux capteurs 5 et 6 et les surfaces $S_1$ et $S_2$ sont égales. Dans ce cas, la température de l'air $T_a$ dans l'habitacle du véhicule automobile peut être donnée par la formule 3 ci-dessous :

$$T_a = \frac{T_2\Phi_1 - T_1\Phi_2}{\Phi_1 - \Phi_2} \qquad (3)$$

On voit ainsi qu'on peut déterminer la température de l'air $T_a$ dans l'habitacle du véhicule automobile à partir des flux $\Phi_1$ et $\Phi_2$ et des températures $T_1$ et $T_2$, dans la mesure où les flux $\Phi_1$ et $\Phi_2$ sont différents.

Le maintien du second capteur de flux thermique 6 à une température $T_2$ différente de la température $T_1$ du premier capteur de flux thermique 5 permet d'assurer que les flux $\Phi_1$ et $\Phi_2$ sont différents et qu'il est possible ainsi de déterminer la température de l'air $T_a$ dans l'habitacle du véhicule automobile à chaque instant

Le signal 12 représentatif de la mesure de la température de l'air $T_a$ dans l'habitacle du véhicule automobile peut être utilisé pour commander un climatiseur assurant de bonnes conditions de confort dans l'habitacle du véhicule automobile.

La bonne précision de mesure des capteurs de flux thermique ou fluxmètres 5 et 6 permet d'obtenir la température $T_a$ avec une très bonne précision.

En outre, le dispositif de mesure 1 utilisant des capteurs de flux thermique est mis en oeuvre sans utiliser de ventilateur de brassage de l'air du local au contact du dispositif de mesure, ce qui permet de limiter le coût du capteur. En outre, le dispositif de mesure 1 est de forme entièrement plate et présente une très faible épaisseur, de sorte qu'il est très facile d'intégrer le dispositif de mesure à une paroi d'un local tel que l'habitacle d'un véhicule automobile.

Le dispositif est également plus fiable qu'un dispositif comportant un moto-ventilateur, dans la mesure où l'on s'affranchit du problème relatif à la fiabilité de fonctionnement du moto-ventilateur, pendant des périodes d'utilisation de très longue durée. Dans le cas de l'utilisation d'un capteur selon l'art antérieur associé à un moto-ventilateur, il est également nécessaire de prévoir l'intégration de la grille d'entrée du ventilateur dans une paroi de l'habitacle du véhicule automobile, ce qui impose des contraintes pour le style de l'habitacle du véhicule automobile, du fait que la grille est visible.

L'invention ne se limite pas au mode de réalisation qui a été décrit.

C'est ainsi que la température $T_2$ du second capteur thermique peut être réglée à une valeur inférieure ou supérieure à la température $T_1$ du premier capteur de flux thermique 5.

On peut utiliser une résistance électrique de chauffage telle que décrit plus haut ou un autre moyen de chauffage, ou encore un moyen de refroidissement du second capteur de flux thermique 6, qui est régulé pour maintenir constamment la température du second capteur à une valeur $T_2$ inférieure à la valeur de la température $T_1$ du premier capteur de flux thermique.

Dans le cas d'une résistance chauffante 7, le courant de chauffage d'intensité i fournissant de la chaleur par effet Joule dans la résistance électrique 7 peut être régulé à une valeur permettant de maintenir la température $T_2$ à une valeur fixe, la régulation étant effectuée par le module électronique 10.

Le procédé et le dispositif suivant l'invention s'appliquent à tout véhicule automobile comportant un habitacle dans lequel on désire assurer le confort de passagers. En particulier, le procédé et le dispositif suivant l'invention peuvent être utilisés pour régler le climatiseur de l'habitacle d'un véhicule automobile.

L'invention peut être appliquée en dehors de la climatisation des véhicules automobiles et, par exemple, pour régler le chauffage et la climatisation de bâtiments.

**Revendications**

1. Procédé de mesure de la température de l'air dans un local (4) par exemple dans un habitacle d'un véhicule automobile, **caractérisé par le fait :**

   qu'on mesure un premier flux thermique ($\Phi_1$) sur un premier capteur de flux thermique (5) disposé dans le local (4),

   - qu'on règle la température ($T_2$) d'un second capteur de flux thermique (6) disposé dans le local (4) à une valeur différente

d'une température ($T_1$) du premier capteur de flux thermique (5), par l'un au moins d'un apport ou d'un prélèvement de chaleur sur le second capteur (6),

- **qu'**on mesure un second flux thermique ($\Phi_2$) traversant le second capteur de flux thermique (6),
- **qu'**on mesure les température ($T_1$) et ($T_2$) du premier et du second capteurs (5, 6), respectivement, et
- **qu'**on calcule, à partir du premier et du second flux thermique ($\Phi_1$, $\Phi_2$) et des températures ($T_1$, $T_2$) du premier et du second capteurs (5, 6), la température de l'air ($T_a$) dans le local (4).

2. Procédé suivant la revendication 1, **caractérisé par le fait qu'**on réalise le chauffage du second capteur de flux thermique (6) par une résistance électrique (7) dont l'alimentation en courant électrique (8) est régulée à partir de la mesure des températures ($T_1$, $T_2$) du premier capteur de flux thermique (5) et du second capteur de flux thermique (6).

3. Procédé de mesure suivant l'une quelconque des revendications 1 et 2, **caractérisé par le fait qu'**on calcule la température ($T_a$) de l'air dans le local (4) par la formule :

$$T_a = \frac{T_2 \Phi_1 - T_1 \Phi_2}{\Phi_1 - \Phi_2},$$

dans laquelle

($\Phi_1$) est le flux mesuré par le premier capteur de flux thermique (5),
($\Phi_2$) est le flux mesuré par le second capteur de flux thermique (6),
$T_1$ est la température du premier capteur de flux thermique (5), et
$T_2$ est la température du second capteur de flux thermique (6).

4. Procédé de mesure suivant l'une quelconque des revendications 1 à 3, **caractérisé par le fait qu'**on élabore un signal de mesure représentatif de la température ($T_a$) de l'air dans le local (4) et qu'on utilise le signal représentatif de la température de l'air ($T_a$) pour commander un dispositif de climatisation du local (4), par exemple un climatiseur d'un habitacle (4) d'un véhicule automobile.

5. Dispositif de mesure de la température de l'air dans un local (4), par exemple dans un habitacle d'un véhicule automobile, **caractérisé par le fait qu'**il comporte à l'intérieur du local (4) :

- un premier capteur de flux thermique (5) de mesure d'un premier flux thermique ($\Phi_1$),
- un second capteur de flux thermique (6) de mesure d'un second flux thermique ($\Phi_2$),
- l'un au moins d'un moyen d'apport (7) et d'un moyen de prélèvement de chaleur sur le second capteur de flux thermique (6) commandé pour régler une température ($T_2$) du second capteur de flux thermique (6) à une valeur différente d'une température ($T_1$) du premier capteur de flux thermique (5),
- des moyens de mesure de la température du premier et du second capteurs (5, 6), respectivement, et
- un module (10) de calcul de la température ($T_a$) de l'air dans le local (4) à partir du premier et du second flux thermiques ($\Phi_1$, $\Phi_2$) et des températures ($T_1$, $T_2$) du premier et du second capteurs.

6. Dispositif de mesure suivant la revendication 5, **caractérisé par le fait que** le premier capteur de flux thermique (5) et le second capteur de flux thermique (6) sont constitués sous la forme de plaquettes de faible épaisseur disposées de manière adjacente sur un support (2) lui-même fixé sur une paroi (3) du local (4), chacun des capteurs de flux thermique (5, 6) comportant des bornes de sorties reliées par l'intermédiaire de conducteurs électriques (9, 9') à un module de calcul électronique (10), de manière à transmettre au module de calcul électronique (10) un signal de tension représentatif du premier flux thermique ($\Phi_1$) et du second flux thermique ($\Phi_2$), respectivement, et un dispositif de mesure de température relié par un conducteur électrique (11, 11') au module électronique (10) pour transmettre au module électronique (10) un signal représentatif de la température ($T_1$), et de la température ($T_2$), respectivement, du capteur de mesure de flux thermique (5, 6).

7. Dispositif de mesure suivant la revendication 6, **caractérisé par le fait que** le second capteur de flux thermique (6) est fixé sur une résistance électrique de chauffage (7), elle-même fixée sur le support (2) du dispositif de mesure (1), la résistance électrique de chauffage (7) étant reliée à un dispositif d'alimentation (8) en courant électrique régulé par le module de calcul électronique (10) pour maintenir le second capteur de flux thermique (6) à une température ($T_2$) différente de la température ($T_1$) du premier capteur de flux thermique (5).

EP 1 172 639 A1

**Office européen des brevets**

## RAPPORT DE RECHERCHE EUROPEENNE

Numéro de la demande

EP 01 40 1732

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 426 517 A (LUXTRON CORP) 8 mai 1991 (1991-05-08) * abrégé; figures * --- | 1,2,5 | G01K7/42 G01K1/20 |
| A | US 5 464 284 A (RALL DIETER L) 7 novembre 1995 (1995-11-07) * abrégé; figures * --- | 1,2,5 | |
| A | GB 2 207 759 A (ALCOM LIMITED) 8 février 1989 (1989-02-08) * le document en entier * --- | 1,3,5 | |
| A | PATENT ABSTRACTS OF JAPAN vol. 006, no. 030 (P-103), 23 février 1982 (1982-02-23) -& JP 56 150316 A (SHOWA DENKO KK), 20 novembre 1981 (1981-11-20) * abrégé * ----- | 6 | |

**DOMAINES TECHNIQUES RECHERCHES (Int.Cl.7)**

G01K
G01W

Le présent rapport a été établi pour toutes les revendications

| Lieu de la recherche | Date d'achèvement de la recherche | Examinateur |
|---|---|---|
| LA HAYE | 20 août 2001 | Ramboer, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 172 639 A1**

## ANNEXE AU RAPPORT DE RECHERCHE EUROPEENNE
## RELATIF A LA DEMANDE DE BREVET EUROPEEN NO.

EP 01 40 1732

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-08-2001

| Document brevet cité au rapport de recherche | | Date de publication | Membre(s) de la famille de brevet(s) | | Date de publication |
|---|---|---|---|---|---|
| EP 0426517 | A | 08-05-1991 | US | 5216625 A | 01-06-1993 |
| | | | DE | 69004784 D | 05-01-1994 |
| | | | DE | 69004784 T | 17-03-1994 |
| | | | JP | 2033311 C | 19-03-1996 |
| | | | JP | 3148026 A | 24-06-1991 |
| | | | JP | 7054272 B | 07-06-1995 |
| | | | US | 5294200 A | 15-03-1994 |
| US 5464284 | A | 07-11-1995 | WO | 9527886 A | 19-10-1995 |
| GB 2207759 | A | 08-02-1989 | AUCUN | | |
| JP 56150316 | A | 20-11-1981 | JP | 1343379 C | 29-10-1986 |
| | | | JP | 61008929 B | 18-03-1986 |

EPO FORM P0460

Pour tout renseignement concernant cette annexe : voir Journal Officiel de l'Office européen des brevets, No.12/82

8